# FASCICULE DE BREVET EUROPEEN

(11) **EP 2 701 953 B1**
(45) Date de publication et mention de la délivrance du brevet: **17.06.2015**
(21) Numéro de dépôt: 12704402.2
(22) Date de dépôt: 13.02.2012
(51) Int. Cl.: B60T 7/06, B60R 21/09, G05G 1/32

(54) **DISPOSITIF DE MONTAGE D'UNE PEDALE D'UN VEHICULE AUTOMOBILE**
FAHRZEUGPEDALMONTAGEANORDNUNG
VEHICLE PEDAL ASSEMBLING DEVICE

(30) Priorité: 26.04.2011 FR 1153570
(43) Date de publication de la demande: 05.03.2014
(73) Titulaire: Renault S.A.S., 92100 Boulogne-Billancourt (FR)
(72) Inventeur: MERLIN, Fabrice, F-91810 Vert Le Grand (FR); MACHON, Rene-Paul, F-91390 Morsang Sur Orge (FR); MALCUY, Jean Luc, F-78500 Sartrouville (FR)
(86) Numéro de dépôt international: PCT/EP2012/052372
(87) Numéro de publication internationale: WO 2012/146403

(56) Documents cités:
- DE-A1- 19 757 832
- DE-A1-102005 058 428
- US-A1- 2005 050 980
- US-A1- 2005 076 738
- US-A1- 2007 227 289

## Description

L'invention se rapporte à un dispositif de montage d'une pédale d'actionnement sur un véhicule. Généralement un véhicule automobile conventionnel est doté de différentes pédales d'actionnement, comme par exemple, une pédale de frein ou une pédale d'embrayage, situées au niveau des pieds du conducteur, et émergeant dans un espace libre placé à l'avant du siège conducteur. Outre le fait d'accomplir avec rigueur et précision leur fonction, ces pédales doivent être montées dans le véhicule en respectant certaines règles de sécurité, notamment vis-à-vis du conducteur. L'invention se rapporte plus spécialement à un dispositif de montage d'une pédale d'actionnement tenant compte de la sécurité du conducteur, notamment dans le cas d'un choc frontal.

Les dispositifs de montage d'une pédale d'actionnement dans un véhicule automobile existent et ont déjà fait l'objet de brevets. On peut par exemple citer le brevet EP0965506 ou le DE19757832 A1 qui se rapporte à un dispositif de montage d'une pédale, dont le principe consiste à mettre en oeuvre un dispositif de cisaillage prévu pour désolidariser la pédale de son support, dans le cas d'une intrusion partielle du bloc avant dans l'habitacle, suite à un choc. En effet, la pédale est fixée à son support par l'intermédiaire d'un axe de rotation, et le dispositif de cisaillage est agencé dans le véhicule pour sectionner les deux extrémités de l'axe de la pédale lorsque ledit support pénètre dans ledit habitacle sous l'effet d'une collision. Par ce biais, la course accidentelle de la pédale, qui est initialement liée au support en mouvement, est stoppée très tôt, évitant ainsi de venir percuter, de façon rigide, les jambes du conducteur.

Toutefois, le risque important, voire majeur, encouru avec ce type de dispositif de montage, est que le dispositif de cisaillage se déclenche intempestivement, sans raison apparente, alors que le véhicule n'est soumis à aucun choc. La pédale se décroche alors de son support, et le conducteur ne peut plus, par exemple, freiner son véhicule ou procéder à une opération de débrayage. Certes, les probabilités de voir une telle situation se produire sont minimes, mais existent quand même. Or, les conséquences d'une déficience inopinée du système de freinage ou d'embrayage lors d'une phase de roulage normale peuvent être dramatiques, car elles peuvent entrainer des dommages corporels irréversibles, voire mortels. Il devient alors urgent et nécessaire de sécuriser les dispositifs de montage de pédale existants, afin d'éviter ces situations potentiellement dangereuses. Les procédés de montage d'une pédale sur un véhicule automobile selon l'invention, sont conçus pour permettre à la pédale qui s'est ainsi désolidarisée de son support, que ce soit en situation de routine ou en situation accidentelle, de conserver au moins une partie de son intégrité fonctionnelle. De cette manière, un conducteur surpris de ne pas pouvoir actionner normalement sa pédale de frein ou sa pédale d'embrayage, pourra toujours rattraper la situation, en actionnant quand même la pédale déficiente, car celle-ci est configurée pour demeurer active même lorsqu'elle est séparée de son support.

L'invention se rapporte à un dispositif de montage d'une pédale d'un véhicule, comprenant un support sur lequel est montée la pédale par l'intermédiaire d'un axe de rotation, des moyens de cisaillage reliés à un élément de carrosserie fixe dudit véhicule, lesdits moyens de cisaillages étant aptes à cisailler radialement ledit axe dans le cas d'un déplacement dudit support par rapport audit élément de carrosserie, pour désolidariser ladite pédale dudit support. La principale caractéristique d'un dispositif de montage selon l'invention, est qu'il comprend des moyens de réception placés à proximité de l'axe de la pédale dans sa position normale, et destinés à recevoir ledit axe une fois qu'il a été cisaillé, pour permettre à ladite pédale d'occuper une deuxième position voisine de celle qu'elle occupe habituellement, cette deuxième position lui permettant d'être toujours actionnée afin d'assurer au moins partiellement sa fonction initiale. Il est important de souligner qu'une pédale d'actionnement comprend un bras de levier, dont une extrémité se termine par un patin matérialisant la surface sur laquelle le conducteur va exercer une poussée avec son pied, et dont l'autre extrémité est solidarisée à l'axe de rotation. Ainsi, lorsque ledit axe de rotation est cisaillé, c'est l'ensemble de la pédale qui est libéré de son support. Le bras de levier, le patin et l'axe de rotation forment une pièce unique et indivisible. De cette manière, lorsque les moyens de cisaillage sont entrés en action pour sectionner l'axe de la pédale afin de la libérer de son support, ladite pédale se déplace sur une faible distance, puisque ledit axe est récupérer rapidement par les moyens de réception. La pédale se retrouve alors dans une position voisine de celle qu'elle occupe normalement, et conserve ainsi la possibilité d'être actionnée par une simple pression du pied de la part du conducteur. La pédale peut ainsi conserver l'intégralité de son potentiel d'actionnement, ou au moins une partie significative de celui-ci, pour assurer avec une efficacité minimum le déclenchement du mécanisme auquel elle est raccordée.

Avantageusement, la pédale est une pédale de frein et le véhicule est un véhicule automobile. Les dispositifs de montage selon l'invention ont été initialement développés pour les pédales de frein montées sur un véhicule automobile, car une défaillance imprévue du système de freinage lors d'une phase normale de roulage, peut avoir des conséquences dramatiques sur les personnes, alors qu'une défaillance de l'embrayage peut paraitre moins sévère.

De façon préférentielle, les moyens de réception comprennent des moyens de guidage et au moins une butée de calage dudit axe. En effet, il est important que la course de la pédale, une fois qu'elle a été désolidarisée de son support, soit maitrisée dès le départ, afin qu'elle ne puisse pas venir se loger n'importe où, dans un espace non prévu à cet effet et où elle pourrait s'avérer dangereuse. Ainsi, le dispositif de guidage permet de contrôler en amont la direction de déplacement de ladite pédale. La butée de calage permet de figer la nouvelle position de ladite pédale, une fois qu'elle s'est décrochée de son support.

Préférentiellement, les moyens de guidage comprennent deux rails parallèles et en léger dévers, chacun des deux rails se terminant par une extrémité incurvée, lesdites extrémités constituant chacune une butée de calage pour l'axe. Il s'agit d'un mode de réalisation simple, rapide à mettre en oeuvre et largement éprouvé. Avantageusement, les deux rails sont perpendiculaires à l'axe de rotation de la pédale, ledit axe glissant sur lesdits rails pour venir se caler contre chaque butée.

De façon avantageuse, chaque extrémité forme un coude arrondi à 180°, le rayon de courbure dudit coude étant supérieur au rayon de courbure de l'axe. De cette manière, chaque extrémité incurvée peut enserrer étroitement l'axe, l'empêchant de s'éloigner desdits rails et réduisant ainsi les possibilités que ledit axe « sorte » desdits rails.

Avantageusement, l'écartement des rails est suffisamment important pour permettre la rotation de la pédale, une fois que l'axe se retrouve en appui contre chacune des butées de calage. Cette caractéristique est importante, dans la mesure où la pédale doit conserver un degré de liberté en rotation, afin qu'elle puisse encore être actionnée au moyen d'une poussée exercée par le pied du conducteur sur le patin. Les rails ne doivent jamais entraver le mouvement rotatif d'actionnement de la pédale.

De façon préférentielle, les moyens de cisaillage comprennent au moins un couteau. Autrement dit, les moyens de cisaillage comprennent au moins une lame aiguisée apte à cisailler ou à sectionner ledit axe. Pour ce mode de réalisation, l'axe de la pédale est plutôt réalisé dans un matériau de type plastique. De façon avantageuse, le dispositif de montage comporte deux couteaux, chacun étant positionné au niveau de l'une des extrémités de l'axe.

Avantageusement, chaque couteau comprend deux branches coupantes en forme de V. Il s'agit d'une configuration optimisée assurant le sectionnement de l'axe dans le cas d'un choc frontal. En effet, le support de la pédale, auquel est solidarisé ledit axe, recule brutalement en cas de choc frontal, propulsant ainsi l'axe entre les deux branches du couteau, qui est aussitôt cisaillé. Une configuration en forme de V accroit les éléments tranchants du dispositif de cisaillage, l'action de cisaillage augmentant graduellement au fur et à mesure que l'axe progresse entre les deux branches.

De façon préférentielle, les moyens de réception sont placés en dessous de l'axe de la pédale en fonctionnement normal, permettant audit axe de venir se loger par inertie dans lesdits moyens de réception, une fois que la pédale s'est désolidarisée de son support. En effet, une fois que l'axe a été sectionné et que la pédale s'est désolidarisée de son support, celle-ci a naturellement tendance à amorcer une chute vers le plancher du véhicule sous l'effet de son poids. De cette manière, les moyens de réception doivent être positionnés de façon à pouvoir récupérer le plus tôt possible l'axe de ladite pédale. Les moyens de réception peuvent ainsi être positionnés, soit rigoureusement au droit de l'axe de la pédale, soit en étant décalés avec celui-ci, l'essentiel étant que l'axe ne puisse pas éviter les moyens de réception.

Préférentiellement, la nouvelle position adoptée par la pédale après avoir été désolidarisée de son support, permet à ladite pédale d'être toujours actionnée mais avec une course réduite. Autrement dit, s'il on suppose que la position de fin de course de la pédale est la même entre la configuration normale et la configuration modifiée, la pédale s'est rapprochée de cette position de fin de course lorsqu'elle est passée de sa position normale à sa position modifiée. De cette manière, l'amplitude d'actionnement de la pédale dans sa nouvelle position va s'en trouver réduite par rapport à celle correspondant à sa position normale.

Les dispositifs de montage d'une pédale selon l'invention, présentent l'avantage d'accroître la sécurité des occupants d'un véhicule, en permettant au conducteur de laisser une course résiduelle d'actionnement de la pédale, une fois qu'elle a été désolidarisée de son support, suite à un choc ou dans une situation normale de roulage. Malgré cette fonctionnalité supplémentaire, ces dispositifs ont l'avantage de conserver un encombrement constant par rapport aux dispositifs existants. Enfin, la simplicité du mécanisme de récupération de la pédale mis en jeu dans ces dispositifs, leur confère un caractère de grande sûreté et de grande fiabilité.

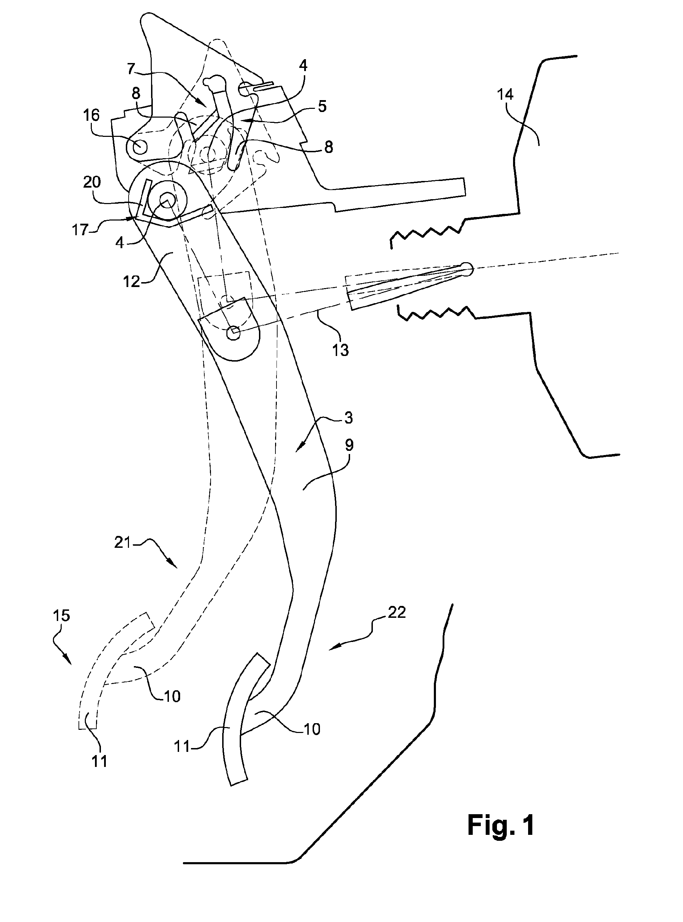

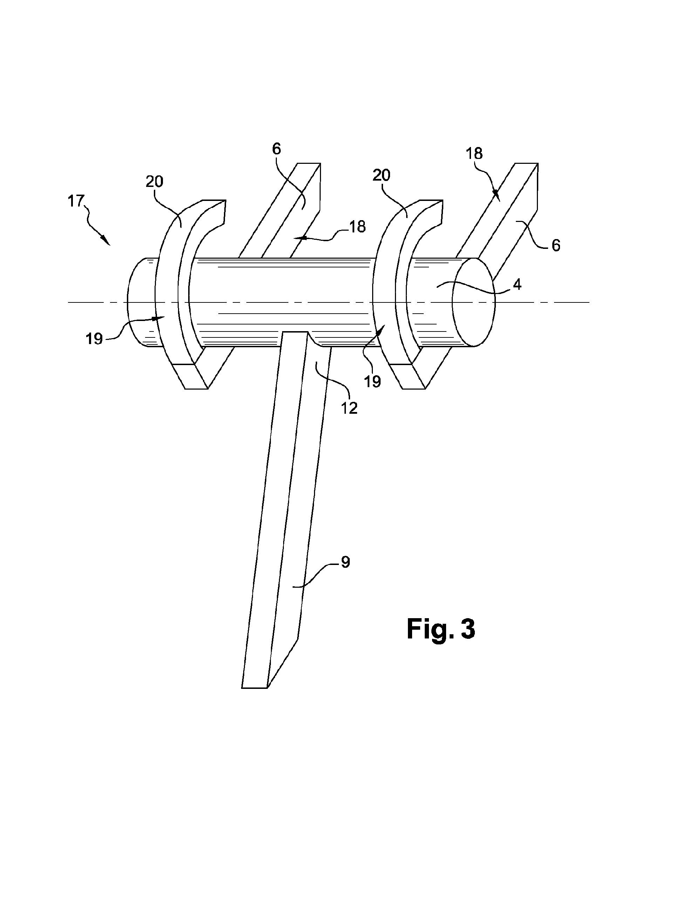

On donne ci-après une description détaillée d'un mode de réalisation préféré d'un dispositif de montage d'une pédale selon l'invention, en se référant aux figures 1 et 3.
- La figure 1 est une vue schématique d'un dispositif de montage selon l'invention montrant simultanément une première position normale de la pédale, et une deuxième position modifiée de celle-ci.
- La figure 2 est une vue plus complète de la figure 1, montrant notamment le support de la pédale.
- La figure 3 est une vue simplifiée en perspective des moyens de réception de l'axe de la pédale mis en oeuvre dans un dispositif selon l'invention.

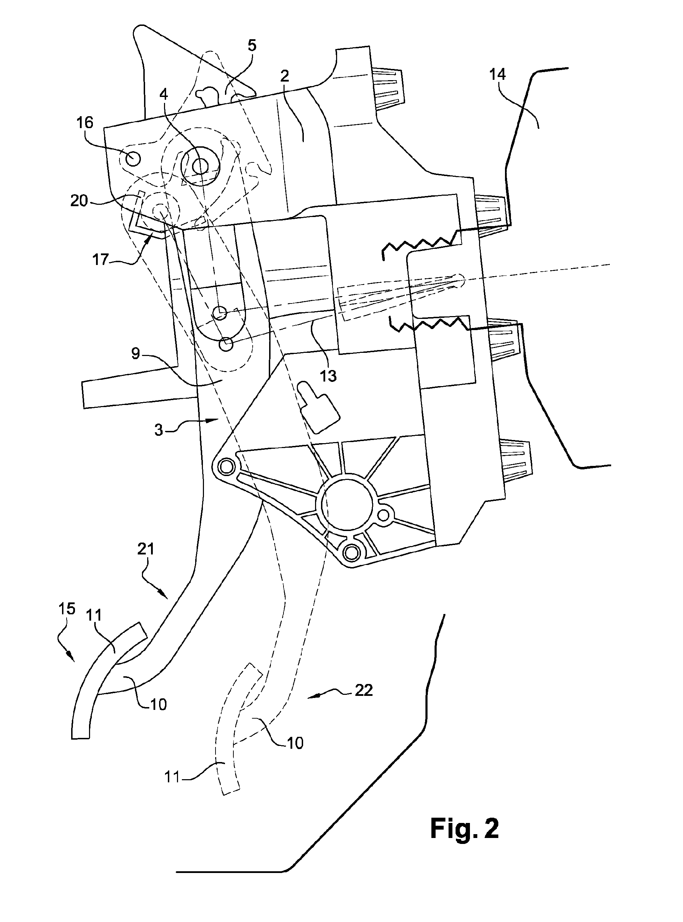

En se référant à la figure 1 et à la figure 2, un dispositif de montage d'une pédale selon l'invention, comprend un support 2 sur lequel est montée une pédale 3 de frein par l'intermédiaire d'un axe de rotation 4, et des moyens de cisaillage 5 solidarisés à un élément de carrosserie fixe. Les moyens de cisaillage 5, qui peuvent par exemple être analogues à ceux décrits dans le brevet EP0965506, comprennent deux couteaux 7 constitués chacun par deux branches coupantes 8 disposées en V. La pédale 3 est constituée conventionnellement par un bras de levier 9 allongé, dont une première extrémité 10 se termine par un patin 11 rugueux, matérialisant la surface d'appui sur laquelle un conducteur va exercer une pression avec le pied pour déclencher le freinage du véhicule, et dont une deuxième extrémité 12 porte l'axe de rotation 4 et est solidarisée au support 2 par l'intermédiaire dudit axe 4. Des éléments de transmission 13 relient le bras de levier 9 au système de freinage 14. En fonctionnement normal, une pression appliquée sur la pédale 3 au niveau du patin 11, engendre la rotation de la pédale 3 autour de son axe de rotation 4 dans le sens indiqué par la flèche 15, cette rotation activant les éléments de transmission 13 qui déclenchent aussitôt le freinage du véhicule. Un système de rappel permet alors à la pédale 3 de frein de retrouver sa position initiale lorsque le conducteur cesse d'appliquer un effort de poussée sur le patin 11. Les moyens de cisaillage 5 ont été mis au point dans le but d'accroitre la sécurité du conducteur dans le cas d'un choc frontal. En effet, lors de ce type de choc, le support 2 de la pédale 3 a tendance à reculer vers l'arrière du véhicule, entrainant avec lui l'axe 4 de la pédale 3 qui lui est solidarisé. Les deux branches coupantes 8 de chaque couteau 7 placé au niveau de chaque extrémité de l'axe 4, amorcent alors un pivotement autour d'un axe secondaire 16 provoqué par le recul du support 2, de sorte que l'axe 4 de la pédale 3 vienne se placer entre lesdites branches coupantes 8 en étant poussé contre celles-ci. Cet axe 4 finit par être cisaillé au niveau de ses deux extrémités sous l'effet des deux couteaux 7, libérant la pédale 3 de son support 2. La pédale 3 se retrouve ainsi séparée de toute structure, et ne peut donc plus venir percuter de façon rigide les jambes du conducteur. La principale spécificité technique d'un dispositif de montage d'une pédale 3 selon l'invention, est qu'il comprend des moyens de réception 17 de l'axe 4 de la pédale 3, une fois que celui-ci a été sectionné par les moyens de cisaillage 5. Il est naturellement supposé que l'axe 4 de la pédale 3 n'est jamais séparé de celle-ci. En effet, lorsque les moyens de cisaillage 5 entrent en action, ils cisaillent l'axe de rotation 4 de la pédale 3, désolidarisant celle-ci de son support 2. La pédale 3 peut alors se déplacer de façon autonome et anarchique dans l'habitacle. Les moyens de réception 17 recueillent la pédale 3 ainsi libérée, au niveau de son axe 4 de rotation pour la figer dans une deuxième position opérationnelle.

En se référant à la figure 3, les moyens de réception 17 comportent des moyens de guidage 18 et deux butées 19 de calage. Les moyens de guidage 18 sont constitués par deux rails 6 parallèles et dont l'écartement est prévu pour, d'une part, soutenir l'axe de rotation 4 de la pédale 3 une fois qu'il a été cisaillé par les moyens de cisaillage 5, et d'autre part, laisser passer entre eux le bras de levier 9 de la pédale 3. Chacun des deux rails 6 se termine par une extrémité 20 incurvée, formant avec le rail 6 correspondant un coude à environ 180°. Le rayon de courbure de ce coude est supérieur au rayon de courbure de l'axe 4 de la pédale, si bien que ledit axe 4 peut coulisser sur les deux rails 6 et venir se bloquer contre les deux extrémités incurvées 20 formant butées 19. Afin d'acheminer l'axe 4 de la pédale 3 contre les butées 19 de calage, les rails 6 sont en léger dévers.

En se référant aux figures 1 et 2, les moyens de réception 17 sont placés sous l'axe 4 de rotation de la pédale 3, lorsque celle-ci occupe sa position normale de fonctionnement. Ainsi, dans le cas d'une rupture de son axe 4 par les moyens de cisaillage 5, la pédale 2 libérée va avoir tendance à chuter vers le plancher du véhicule sous l'effet de son propre poids. L'axe va alors venir naturellement se placer sur les rails 6 de guidage. Lorsque toutes ces pièces sont placées dans un véhicule, l'axe de rotation 4 de la pédale 2 s'étend suivant une direction transversale du véhicule, et les deux rails 6 sont parallèles à un axe longitudinal dudit véhicule. Les moyens de réception 17 de l'axe 4 de la pédale 3 sont prévus pour agir lorsque ledit axe 4 a été sectionné par les moyens de cisaillage 5, soit lors d'un choc frontal accidentel, soit de façon non provoquée en situation normale de roulage.

Le dispositif de montage selon l'invention, permet à la pédale 3 de frein de réagir en suivant les étapes suivantes. Une fois que son axe 4 de rotation a été sectionné sous l'effet des couteaux 7 de cisaillage, la pédale 3 désolidarisée de son support 2 amorce une chute vers le plancher du véhicule sous l'effet de son propre poids. L'axe 4 vient se placer naturellement sur les deux rails 6 en léger dévers, puis coulisse sur ceux-ci jusqu'à venir en butée contre leurs extrémités 20 repliées. La pédale 3 s'est ainsi légèrement déplacée de haut en bas, en faisant pivoter son bras de levier 9 dans un sens pour lequel l'angle de la rotation que la pédale 3 doit subir pour assurer le freinage du véhicule, se trouve réduit par rapport à l'angle de la rotation qu'elle aurait à subir en fonctionnement normal. De cette manière, la pédale de frein passe d'une première position 21 pleinement fonctionnelle, à une deuxième position fonctionnelle 22, un peu moins performante en raison d'une course d'actionnement réduite. Dans la première configuration 21, la pédale 3 peut être actionnée avec une grande amplitude pour assurer pleinement la fonction de freinage. Dans la deuxième configuration 22, elle peut toujours être actionnée pour assurer la fonction de freinage, mais avec une efficacité légèrement moindre.

## Revendications

1. Dispositif de montage d'une pédale (3) d'un véhicule, comprenant un support (2) sur lequel est montée la pédale (3) par l'intermédiaire d'un axe de rotation (4), des moyens de cisaillage (5) reliés à un élément de carrosserie fixe dudit véhicule, lesdits moyens de cisaillages (5) étant aptes à cisailler radialement ledit axe (4) dans le cas d'un déplacement dudit support (2) par rapport audit élément de carrosserie, pour désolidariser ladite pédale (3) dudit support (2), **caractérisé en ce qu'**il comprend des moyens de réception (17) placés à proximité de l'axe (4) de la pédale (3) dans sa position normale (21), et destinés à recevoir ledit axe (4) une fois qu'il a été cisaillé, pour permettre à ladite pédale (3) d'occuper une deuxième position (22) voisine de celle qu'elle occupe habituellement, cette deuxième position (22) lui permettant d'être toujours actionnée afin d'assurer au moins partiellement sa fonction initiale.

2. Dispositif selon la revendication 1, **caractérisé en ce que** la pédale (3) est une pédale de frein et que le véhicule est un véhicule automobile.

3. Dispositif selon l'une quelconque des revendications 1 ou 2, **caractérisé en ce que** les moyens de réception (17) comprennent des moyens de guidage (18) et au moins une butée (19,20) de calage dudit axe (4).

4. Dispositif selon la revendication 3, **caractérisé en ce que** les moyens de guidage (18) comprennent deux rails (6) parallèles et en léger dévers, et **en ce que** chacun des deux rails (6) se termine par une extrémité incurvée (20), lesdites extrémités constituant chacune une butée (19) de calage pour l'axe (4).

5. Dispositif selon la revendication 4, **caractérisé en ce que** chaque extrémité (20) forme un coude arrondi à 180°, le rayon de courbure dudit coude étant supérieur au rayon de courbure de l'axe (4).

6. Dispositif selon l'une quelconque des revendications 4 ou 5, **caractérisé en ce que** l'écartement des rails (6) est suffisamment important pour permettre la rotation de la pédale (3), une fois que l'axe (4) se retrouve en appui contre chacune des butées (19,20) de calage.

7. Dispositif selon l'une quelconque des revendications précédentes, **caractérisé en ce que** les moyens de cisaillage (5) comprennent au moins un couteau (7).

8. Dispositif selon la revendication 7, **caractérisé en ce que** chaque couteau (7) comprend deux branches coupantes (8) en forme de V.

9. Dispositif selon l'une quelconque des revendications précédentes, **caractérisé en ce que** les moyens de réception (17) sont placés en dessous de l'axe (4) de la pédale en fonctionnement normal, permettant audit axe (4) de venir se loger par inertie dans lesdits moyens de réception (17), une fois que la pédale (3) s'est désolidarisée de son support (2).

10. Dispositif selon l'une quelconque des revendications précédentes, **caractérisé en ce que** la nouvelle position (22) adoptée par la pédale (3) après avoir été désolidarisée de son support, permet à ladite pédale (3) d'être toujours actionnée mais avec une course réduite.

## Patentansprüche

1. Montageanordnung eines Gaspedals (3) eines Fahrzeugs, die einen Träger (2) umfasst, auf den das Pedal (3) über eine Rotationsachse (4) montiert ist, Schermittel (5), die mit einem stationären Karosserieelement des Fahrzeugs verbunden sind, wobei die Schermittel (5) angepasst sind, um die Achse (4) in dem Fall einer Verlagerung des Trägers (2) in Bezug auf das Karosserieelement radial zu durchscheren, um das Pedal (3) von dem Träger (2) zu trennen, **dadurch gekennzeichnet, dass** sie Aufnahmemittel (17) umfasst, die in der Nähe der Achse (4) des Pedals (3) in seiner normalen Position (21) platziert und dazu bestimmt sind, die Achse (4) aufzunehmen, nachdem sie durchschert wurde, um es dem Pedal (3) zu erlauben, eine zweite Position (22) nahe derjenigen, die es gewöhnlich einnimmt, einzunehmen, wobei es ihm diese zweite Position (22) immer noch erlaubt betätigt zu werden, um seine ursprüngliche Funktion mindestens teilweise sicherzustellen.

2. Anordnung nach Anspruch 1, **dadurch gekennzeichnet, dass** das Pedal (3) ein Bremspedal ist, und dass das Fahrzeug ein Kraftfahrzeug ist.

3. Vorrichtung nach einem der Ansprüche 1 oder 2, **dadurch gekennzeichnet, dass** die Aufnahmemittel (17) Führungsmittel (18) und mindestens einen Anschlag (19, 20) zum Verkeilen der Achse (4) umfassen.

4. Vorrichtung nach Anspruch 3, **dadurch gekennzeichnet, dass** die Führungsmittel (18) zwei Schienen (6), die parallel und leicht schräg sind, umfassen, und dass jede der zwei Schienen (6) in einem gebogenen Ende (20) endet, wobei die Enden jeweils einen Verkeilungsanschlag (19) für die Achse (4) bilden.

5. Vorrichtung nach Anspruch 4, **dadurch gekennzeichnet, dass** jedes Ende (20) einen gerundeten Winkel zu 180° bildet, wobei der Krümmungswinkel des Winkels größer ist als der Krümmungsradius der Achse (4).

6. Vorrichtung nach einem der Ansprüche 4 oder 5, **dadurch gekennzeichnet, dass** der Abstand der Schienen (6) ausreichend groß ist, um die Drehung des Pedals (3) zu erlauben, sobald sich die Achse (4) in Auflage gegen jeden der Verkeilungsanschläge (19, 20) befindet.

7. Vorrichtung nach einem der vorhergehenden Ansprüche, **dadurch gekennzeichnet, dass** die Schermittel (5) mindestens eine Klinge (7) umfassen.

8. Vorrichtung nach Anspruch 7, **dadurch gekennzeichnet, dass** jede Klinge (7) zwei schneidende Schenkel (8) in V-Form umfasst.

9. Vorrichtung nach einem der vorhergehenden Ansprüche, **dadurch gekennzeichnet, dass** die Aufnahmemittel (17) im normalen Betrieb unterhalb der Achse (4) des Pedals platziert sind, was es der Achse (4) erlaubt, sich trägheitsbedingt in die Aufnahmemittel (17) zu fügen, sobald das Pedal (3) von seinem Träger (2) getrennt ist.

10. Vorrichtung nach einem der vorhergehenden Ansprüche, **dadurch gekennzeichnet, dass** die neue Position (22), die das Pedal (3) einnimmt, nachdem es von seinem Träger getrennt wurde, es dem Pedal (3) immer noch erlaubt betätigt zu werden, jedoch mit einem verringerten Hub.

## Claims

1. Device for mounting a vehicle pedal (3), comprising a mount (2) on which the pedal (3) is mounted via a pivot pin (4), shearing means (5) connected to a fixed bodywork element of said vehicle, said shearing means (5) being able to shear said pivot pin (4) radially if said mount (2) moves in relation to said bodywork element, so as to detach said pedal (3) from said mount (2), **characterized in that** it comprises catching means (17) positioned near to the pivot pin (4) of the pedal (3) in its normal position (21) and intended to catch said pivot pin (4) once it has been sheared so as to allow said pedal (3) to occupy a second position (22) close to the position it usually occupies, this second position (22) still allowing it to be actuated so that it can at least partially perform its initial function.

2. Device according to Claim 1, **characterized in that** the pedal (3) is a brake pedal and that the vehicle is a motor vehicle.

3. Device according to either one of Claims 1 and 2, **characterized in that** the catching means (17) comprise guide means (18) and at least one stop piece (19, 20) for stopping said pivot pin (4).

4. Device according to Claim 3, **characterized in that** the guide means (18) comprise two rails (6) which are parallel and at a slight slope, and **in that** each of the two rails (6) ends in a curved end (20), said ends each constituting a stop piece (19) for stopping the pivot pin (4).

5. Device according to Claim 4, **characterized in that** each end (20) forms an elbow rounded at 180°, the radius of curvature of said elbow being greater than the radius of curvature of the pivot pin (4).

6. Device according to either one of Claims 4 and 5, **characterized in that** the separation of the rails (6) is great enough to allow the pedal (3) to rotate once the pivot pin (4) is resting against each of the stop pieces (19, 20) that stop it.

7. Device according to any one of the preceding claims, **characterized in that** the shearing means (5) comprise at least one cutter (7).

8. Device according to Claim 7, **characterized in that** each cutter (7) comprises two cutting branches (8) in the form of a V.

9. Device according to any one of the preceding claims, **characterized in that** the catching means (17) are placed below the pivot pin (4) of the pedal in normal operation, allowing said pivot pin (4) to become lodged through inertia in said catching means (17) once the pedal (3) has been detached from its mount (2).

10. Device according to any one of the preceding claims, **characterized in that** the new position (22) adopted by the pedal (3) after it has been detached from its mount allows said pedal (3) still to be actuated, but with a reduced travel.
